# EUROPÄISCHE PATENTANMELDUNG

(11) **EP 1 677 505 A1**
(43) Veröffentlichungstag der Anmeldung: **05.07.2006**
(21) Anmeldenummer: 05075044.7
(22) Anmeldetag: 04.01.2005
(51) Int. Cl.: H04M 3/533, H04Q 3/00

(54) **Verfahren zum Aufbauen mehrerer Telekommunikationsverbindungen für den Rückruf zum Urheber einer gespeicherten Sprachnachricht**

(71) Anmelder: SIEMENS AKTIENGESELLSCHAFT, 80333 München (DE)
(72) Erfinder: Berg, Andreas Dr., 13591 Berlin (DE); Ernst, Roland, 36414 Unterbreizbach (DE); Pforr, Edgar, 99834 Gerstungen (DE); Scheibe, Hagen, 85521 Ottobrunn (DE)

(57) **Zusammenfassung**

Die Erfindung betrifft ein Verfahren zum Aufbauen von Telekommunikationsverbindungen unter Nutzung einer auf einem Anrufbeantworter (VMS) gespeicherten Nachricht. Bei diesem Verfahren wird eine erste Telekommunikationsverbindung (V1) zwischen einem ersten Kommunikationsendgerät (KEGA) und dem Anrufbeantworter (VMS) aufgebaut. Über die erste Telekommunikationsverbindung wird von dem ersten Kommunikationsendgerät eine von einem zweiten Kommunikationsendgerät (KEGB) stammende, auf dem Anrufbeantworter gespeicherte Nachricht (N) ausgelesen. Auf ein Verbindungswunschsignal (D) des ersten Kommunikationsendgeräts hin wird eine Kennung (SCPx) eines Dienstesteuerungspunktes (SCP) an eine zweite Vermittlungsstelle (SSP2) übermittelt, und von der zweiten Vermittlungsstelle wird mittels der Kennung der Dienstesteuerungspunkt angesprochen. Daraufhin wird von dem Dienstesteuerungspunkt ein Dienst gesteuert, der eine zweite Telekommunikationsverbindung zwischen dem Anrufbeantworter und dem zweiten Kommunikationsendgerät betrifft. Bei Erhalt einer von dem Dienstesteuerungspunkt stammenden Verbindungsnachricht (CON2) wird von der zweiten Vermittlungsstelle die zweite Telekommunikationsverbindung aufgebaut.

## Beschreibung

Die Erfindung betrifft ein Verfahren zum Aufbauen von Telekommunikationsverbindungen unter Nutzung einer auf einem Anrufbeantworter gespeicherten Nachricht.

In modernen Telekommunikationssystemen werden häufig Anrufbeantworter eingesetzt, auf denen Telekommunikationsteilnehmer eine Nachricht hinterlassen können, wenn der gewünschte Gesprächspartner z. B. nicht erreichbar ist oder einen Ruf nicht entgegennimmt. Solche Anrufbeantworter können beispielsweise als eine externe Einheit an ein Telekommunikationsnetz (z. B. ein Telefon-Festnetz oder ein Mobilfunknetz) angeschlossen sein, sie können aber auch in einer zentralen Einheit eines Telekommunikationsnetzes realisiert sein. Bei der Nutzung von Anrufbeantwortern ist ein Verfahren wünschenswert, bei dem eine auf einem Anrufbeantworter gespeicherte Nachricht ausgelesen und daraufhin eine Kommunikation mit dem Absender dieser Nachricht realisiert wird.

Der Erfindung liegt die Aufgabe zugrunde, ein einfach zu realisierendes, zuverlässiges und flexibles Verfahren zum Aufbauen von Telekommunikationsverbindungen unter Nutzung einer auf einem Anrufbeantworter gespeicherten Nachricht anzugeben.

Diese Aufgabe wird erfindungsgemäß gelöst durch ein Verfahren zum Aufbauen von Telekommunikationsverbindungen unter Nutzung einer auf einem Anrufbeantworter gespeicherten Nachricht, wobei bei dem Verfahren eine erste Telekommunikationsverbindung zwischen einem ersten Kommunikationsendgerät und dem Anrufbeantworter aufgebaut wird, über die erste Telekommunikationsverbindung von dem ersten Kommunikationsendgerät eine von einem zweiten Kommunikationsendgerät stammende, auf dem Anrufbeantworter gespeicherte Nachricht ausgelesen wird, auf ein Verbindungswunschsignal des ersten Kommunikationsendgeräts hin eine Kennung eines Dienstesteuerungspunktes, welcher Dienste für das erste Kommunikationsendgerät steuert, an eine zweite Vermittlungsstelle übermittelt wird, von der zweiten Vermittlungsstelle mittels der Kennung der Dienstesteuerungspunkt angesprochen wird, daraufhin von dem Dienstesteuerungspunkt ein Dienst gesteuert wird, der den Aufbau einer zweiten Telekommunikationsverbindung zwischen dem Anrufbeantworter und dem zweiten Kommunikationsendgerät betrifft, und erst bei Erhalt einer von dem Dienstesteuerungspunkt stammenden Verbindungsnachricht von der zweiten Vermittlungsstelle die zweite Telekommunikationsverbindung aufgebaut wird. Bei dem Verfahren ist besonders vorteilhaft, dass eine Kennung des Dienstesteuerungspunktes an die zweite Vermittlungsstelle übermittelt wird und dass von der zweiten Vermittlungsstelle mittels der Kennung der Dienstesteuerungspunkt angesprochen wird. Dadurch wird dem Dienstesteuerungspunkt ermöglicht, einen Dienst zu steuern, der den Aufbau der zweiten Telekommunikationsverbindung oder die zweite Telekommunikationsverbindung selbst betrifft und - bei einem erfolgreichen Ablauf des Dienstes - eine Verbindungsnachricht an die zweite Vermittlungsstelle zu senden. Daraufhin wird von der zweiten Vermittlungsstelle die zweite Telekommunikationsverbindung aufgebaut. Hierbei ist weiterhin vorteilhaft, dass sich die zweite Vermittlungsstelle (und gegebenenfalls auch der Anrufbeantworter) weit entfernt von dem Dienstesteuerungspunkt (z.B. in einem anderen Telekommunikationsnetz als der Dienstesteuerungspunkt) befinden kann. Durch die Übermittlung der Kennung des Dienstesteuerungspunktes an die zweite Vermittlungsstelle wird sichergestellt, dass auch von einer weit entfernt von dem Dienstesteuerungspunkt (z.B. in einem anderen Telekommunikationsnetz) angeordneten zweiten Vermittlungsstelle sicher und zuverlässig der Dienstesteuerungspunkt angesprochen werden kann.

Das Verfahren kann so ausgestaltet sein, dass als Dienst, der die zweite Telekommunikationsverbindung betrifft, eine Abrechnung von Kommunikationsgebühren für die zweite Telekommunikationsverbindung vorbereitet wird. Damit kann vorteilhafterweise durch den Dienstesteuerungspunkt sichergestellt werden, dass für die zweite Telekommunikationsverbindung (welche unabhängig von dem ersten Kommunikationsendgerät den Anrufbeantworter mit dem zweiten Kommunikationsendgerät verbindet) Kommunikationsgebühren abgerechnet werden.

Das erfindungsgemäße Verfahren kann so ablaufen, dass bei der Vorbereitung der Abrechnung von dem Dienstesteuerungspunkt überprüft wird, ob für das erste Kommunikationsendgerät ein vorausbezahltes Guthaben zur Abrechnung von Telekommunikationsverbindungen vorhanden ist, und bei Vorliegen eines solchen Guthabens eine Abrechnungsnachricht an die zweite Vermittlungsstelle gesendet wird. Dadurch wird vorteilhafterweise ermöglicht, die Kommunikationsgebühren für die zweite Telekommunikationsverbindung mittels eines vorausbezahlten Guthabens (Prepaid-Guthaben, Prepaid-Account) abzurechnen.

Das Verfahren kann dabei so ablaufen, dass durch die Abrechnungsnachricht die zweite Vermittlungsstelle angeregt wird, die zweite Telekommunikationsverbindung zu überwachen und Überwachungsinformationen an den Dienstesteuerungspunkt zu senden.

Das Verfahren kann erfindungsgemäß so ausgestaltet sein, dass das erste Kommunikationsendgerät über die erste Telekommunikationsverbindung und die zweite Telekommunikationsverbindung mit dem zweiten Kommunikationsendgerät verbunden wird.

Erfindungsgemäß kann als Verbindungswunschsignal ein DTMF-Signal verwendet werden. Durch Verwendung eines DTMF-Signals lässt sich als erstes Kommunikationsendgerät z.B. nahezu jedes Telefon einsetzen, da moderne Telefone in der Regel über die Möglichkeit der Erzeugung und Versendung von DTMF-Signalen verfügen.

Das erfindungsgemäße Verfahren kann so ablaufen, dass nach Beendigung der zweiten Telekommunikationsverbindung die erste Telekommunikationsverbindung aufrechterhalten wird, um eine weitere auf dem Anrufbeantworter gespeicherte Nachricht auszulesen. Dadurch wird es dem ersten Kommunikationsendgerät ermöglicht, ohne einen Neustart des Verfahrens auf dem Anrufbeantworter eventuell vorhandene weitere Nachrichten auszulesen.

Das Verfahren kann so ausgestaltet sein, dass gemeinsam mit der Kennung des Dienstesteuerungspunktes die Information übertragen wird, dass Kommunikationsgebühren für das erste Kommunikationsendgerät unter Nutzung eines vorausbezahlten Guthabens abgerechnet werden, und aufgrund der Kennung und der Information von der zweiten Vermittlungsstelle der Dienstesteuerungspunkt angesprochen wird. Dadurch wird vorteilhafterweise erreicht, dass der Dienstesteuerungspunkt nur dann von der zweiten Vermittlungsstelle angesprochen wird, wenn die Kommunikationsgebühren unter Nutzung des vorausbezahlten Guthabens abgerechnet werden soll. Dadurch wird die Belastung des Dienstesteuerungspunktes verringert.

Das Verfahren kann auch so ausgestaltet sein, dass von der zweiten Vermittlungsstelle mittels der Kennung der Dienstesteuerungspunkt nur dann angesprochen wird, wenn die Kennung des Dienstesteuerungspunktes von dem Anrufbeantworter zu der zweiten Vermittlungsstelle übermittelt wird.

Das Verfahren kann auch so ausgestaltet sein, dass von der zweiten Vermittlungsstelle mittels der Kennung der Dienstesteuerungspunkt nur dann angesprochen wird, wenn die Kennung des Dienstesteuerungspunktes von dem Anrufbeantworter über eine vorgewählte Datenverbindungsstrecke zu der zweiten Vermittlungsstelle übermittelt wird. Bei den beiden letztgenannten Ausgestaltungsformen des erfindungsgemäßen Verfahrens wird vorteilhafterweise erreicht, dass der Diensteuerungspunkt durch die zweite Vermittlungsstelle nur dann angesprochen wird, wenn tatsächlich die Kennung des Dienstesteuerungspunktes von dem Anrufbeantworter zu der zweiten Vermittlungsstelle übermittelt wird bzw. wenn die Kennung des Dienstesteuerungspunktes von dem Anrufbeantworter über eine vorgewählte Datenverbindungsstrecke (d. h. einen gewählten Datenkanal) übermittelt wird. Dadurch wird gewährleistet, dass der Dienstesteuerungspunkt einerseits korrekterweise dann angesprochen wird, wenn das Verfahren zum Aufbauen von Telekommunikationsverbindungen unter Nutzung des Anrufbeantworters abläuft, dass aber andererseits unnötige Ansprachen des Dienstesteuerungspunktes vermieden werden. Solche unnötigen Ansprachen könnten beispielsweise dann auftreten, wenn zwar eine Kennung des Dienstesteuerungspunktes an die zweite Vermittlungsstelle übermittelt wird, diese Kennung jedoch nicht von dem Anrufbeantworter stammt (sondern beispielsweise von einem anderen Netzelement des Telekommunikationsnetzes) bzw. diese Kennung nicht über die vorgewählte Datenverbindungsstrecke übermittelt wird.

Zur weiteren Erläuterung der Erfindung ist in der
Figur 1 ein Ausführungsbeispiel von zwei Telekommunikationsnetzen zur Durchführung des erfindungsgemäßen Verfahrens und in
Figur 2 ein Ausführungsbeispiel eines Ablaufs des erfindungsgemäßen Verfahrens dargestellt.

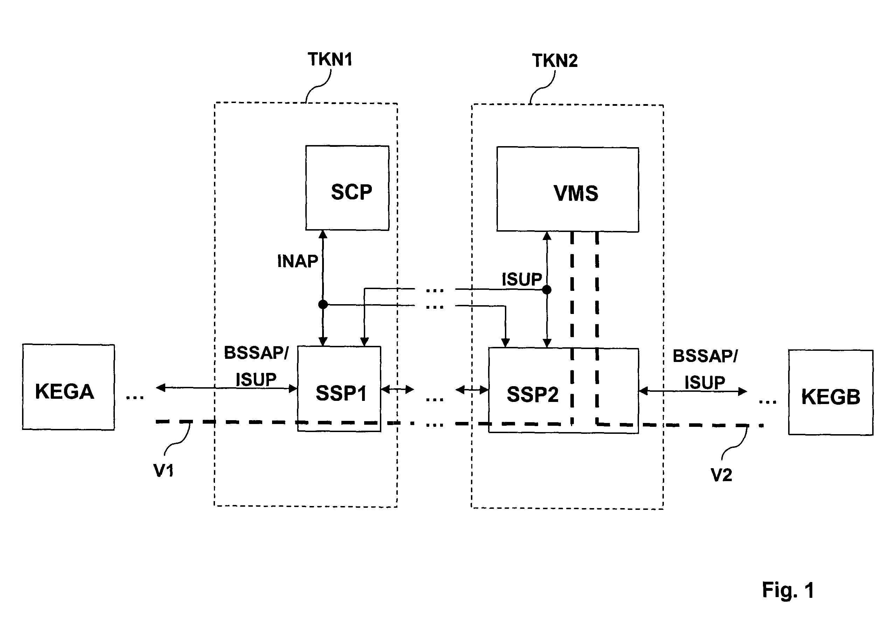

In Figur 1 sind schematisch an dem erfindungsgemäßen Verfahren beteiligte Netzelemente und Kommunikationsendgeräte dargestellt. Im linken Teil der Figur ist ein erstes Kommunikationsendgerät KEGA dargestellt, bei dem es sich im Ausführungsbeispiel um ein Mobiltelefon handelt, beispielsweise um ein Mobiltelefon nach dem Mobilfunkstandard GSM. Das erste Kommunikationsendgerät KEGA ist über eine erste Datenverbindung mit einer ersten Vermittlungsstelle SSP1 (SSP = Service Switching Point) verbunden. Zwischen dem ersten Kommunikationsendgerät KEGA und der ersten Vermittlungsstelle SSP1 können ggf. weitere Vermittlungsstellen zwischengeschaltet sein; die Luftschnittstelle und die Basisstation (base station) sind in der Figur nicht dargestellt. Bei der ersten Datenverbindung werden die Kommunikationsprotokolle BSSAP/ISUP (Base Station System Application Part / ISDN User Part) verwendet.

Die erste Vermittlungsstelle SSP1 ist über eine zweite Datenverbindung mit einem Dienstesteuerungspunkt SCP (SCP = Service Control Point) verbunden. Im Ausführungsbeispiel weist das verwendete Telekommunikationsnetz eine Struktur eines Intelligenten Netzes IN auf: die erste Vermittlungsstelle wird gebildet durch einen in Intelligenten Netzen üblicherweise vorhandenen Dienstevermittlungspunkt SSP (SSP = Service Switching Point); im Ausführungsbeispiel handelt es sich bei der Vermittlungsstelle SSP um eine für Mobilfunkanwendungen vorgesehene Vermittlungsstelle (einen sogenannten "Mobile-SSP", M-SSP). Die Vermittlungsstelle SSP und der in Intelligenten Netzen üblicherweise vorhandene Dienstesteuerpunkt SCP kommunizieren mittels des als solches bekannten Kommunikationsprotokolls INAP (INAP = Intelligent Network Application Part).

Im Ausführungsbeispiel umfasst der Dienstesteuerpunkt SCP ein Abrechnungssystem zur Abrechnung von im Zusammenhang mit einer Kommunikationsverbindung auftretenden Gebühren unter Nutzung von seitens der Telekommunikationsteilnehmer vorausbezahlter Guthaben; der Dienstesteuerpunkt SCP umfasst einen sogenannten "Prepaid-Service PPS". (In einem anderen Ausführungsbeispiel kann das Abrechnungssystem aber auch mittels nach Beendigung der Telekommunikationsverbindungen erzeugten Rechnungen oder Kontenabbuchungen arbeiten, derartige Abrechnungssysteme werden häufig auch als "Postpaid-Service"-Systeme bezeichnet.)

Die erste Vermittlungsstelle SSP1 und der Dienstesteuerungspunkt SCP gehören im Ausführungsbeispiel einem ersten Telekommunikationsnetz TKN1 an; bei dem ersten Telekommunikationsnetz TKN1 handelt es sich um ein Mobilfunknetz (z.B. nach dem GSM-, GPRS- oder UMTS-Standard). Bei dem ersten Telekommunikationsnetz TKN1 handelt es sich im Ausführungsbeispiel um das Heimat-Mobilfunknetz des Kommunikationsendgeräts KEGA.

Die erste Vermittlungsstelle SSP1 ist (eventuell unter Zwischenschaltung weiterer, in der Figur nicht dargestellter Vermittlungsstellen) mit einer zweiten Vermittlungsstelle SSP2 eines zweiten Telekommunikationsnetzes TKN2 verbunden. Bei dem zweiten Telekommunikationsnetz TKN2 handelt es sich im Ausführungsbeispiel um ein Telefon-Festnetz (z.B. um ein ISDN-Netz) oder um ein weiteres Mobilfunknetz (z.B. nach dem GSM-, GPRS- oder UMTS-Standard). In einem weiteren Ausführungsbeispiel können die erste Vermittlungsstelle SSP1 und die zweite Vermittlungsstelle SSP2 aber auch Elemente eines einzigen Telekommunikationsnetzes sein.

Die zweite Vermittlungsstelle SSP2 des zweiten Telekommunikationsnetzes TKN2 ist über eine dritte Datenverbindung mit einem zweiten Kommunikationsendgerät KEGB verbunden. Bei diesem zweiten Kommunikationsendgerät KEGB kann es sich beispielsweise um ein Festnetztelefon oder um ein Mobiltelefon handeln. Im Ausführungsbeispiel werden auch bei der dritten Da-tenverbindung die Kommunikationsprotokolle BSSAP/ISUP verwendet.

Weiterhin ist die zweite Vermittlungsstelle SSP2 über eine vierte Datenverbindung mit einem Anrufbeantworter VMS (VMS = Voice Mail System) verbunden. Diese vierte Datenverbindung nutzt das Kommunikationsprotokoll ISUP. Anrufbeantworter werden oftmals auch als "Mailbox" bezeichnet.

Die erste Vermittlungsstelle SSP1 kann mittels des ISUP-Protokolls auch mit dem Anrufbeantworter kommunizieren; die zweite Vermittlungsstelle SSP2 kann mittels des INAP-Protokolls auch mit dem Dienststeuerungspunkt kommunizieren.

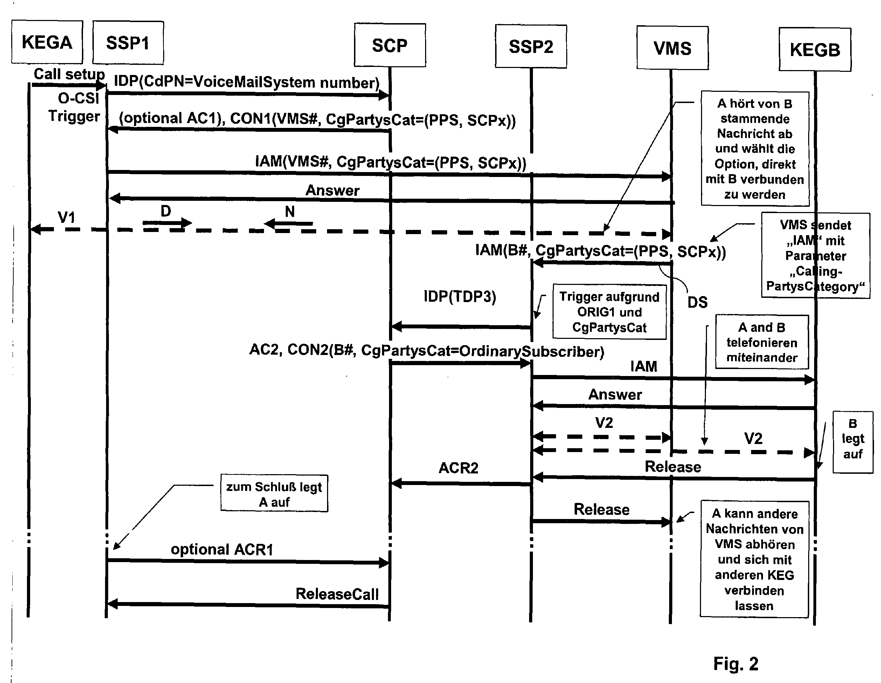

Die in der Figur 1 dargestellte erste Telekommunikationsverbindung V1 und die zweite Telekommunikationsverbindung V2 werden im Zusammenhang mit Figur 2 erläutert.

In Figur 2 ist ein Ausführungsbeispiel des erfindungsgemäßen Verfahrens dargestellt, bei dem unter der Kontrolle eines einzigen Dienstesteuerungspunktes SCP mehrere Telekommunikationsverbindungen aufgebaut und die Gebühren für diese Telekommunikationsverbindungen abgerechnet werden. Die in Figur 2 dargestellten Einheiten (erstes Kommunikationsendgerät KEGA, erste Vermittlungsstelle SSP1, zweite Vermittlungsstelle SSP2, Dienstesteuerungspunkt SCP, Anrufbeantworter VMS und zweites Kommunikationsendgerät KEGB) entsprechen den in der Figur 1 dargestellten Einheiten.

Zu Beginn des Verfahrens wird auf Seiten des ersten Kommunikationsendgeräts KEGA die Telefonnummer (VoiceMailSystem Number) eines dem ersten Kommunikationsendgerät KEGA zugeordneten Anrufbeantworters VMS angewählt. Daraufhin sendet das erste Kommunikationsendgerät KEGA eine Rufaufbaunachricht "Call setup" (Call setup(CgPN, CdPN = VoiceMailSystem number)) an die erste Vermittlungsstelle SSP1. Mit dieser Nachricht werden als Parameter die Telefonnummer (Calling Party Number CgPN) des ersten Kommunikationsendgerätes KEGA und die Telefonnummer (Called Party Number CdPN = VoiceMailSystem number) des Anrufbeantworters VMS übertragen. Die erste Vermittlungsstelle SSP1 erkennt aufgrund eines in der Vermittlungsstelle vorhandenen und bereits vor Verfahrensbeginn armierten ("scharf geschalteten") Triggerpunktes O-CSI (O-CSI Trigger = Originating CAMEL Subscription Information Trigger), dass es sich bei dem ersten Kommunikationsendgerät KEGA um ein Kommunikationsendgerät handelt, für das Dienste von dem Dienstesteuerungspunkt SCP gesteuert werden. Daher sendet die erste Vermittlungsstelle SSP1 eine Startnachricht IDP (IDP = Initial Detection Point) an den Dienstesteuerungspunkt SCP. Mit dieser Startnachricht IDP wird neben der Telefonnummer (CgPN) des ersten Kommunikationsendgerätes KEGA auch die Telefonnummer (CdPN) des Anrufbeantworters VMS übertragen.

Der Dienstesteuerungspunkt SCP überprüft daraufhin, ob für das erste Kommunikationsendgerät KEGA ein voraus bezahltes Guthaben zur Abrechnung von Telekommunikationsverbindungen vorhanden ist. Im Ausführungsbeispiel soll angenommen werden, dass ein ausreichend hohes Guthaben vorhanden ist und das Informationen über dieses Guthaben bei dem Dienstesteuerungspunkt SCP gespeichert sind. Daraufhin sendet der Dienstesteuerungspunkt SCP eine erste Abrechnungsnachricht AC1 an die erste Vermittlungsstelle SSP1 (dieser Schritt ist optional). Mit dieser ersten Abrechnungsnachricht AC1 werden Informationen über das Guthaben an die erste Vermittlungsstelle SSP1 gesendet; beispielsweise kann ein bestimmter Teilbetrag dieses Guthabens an die erste Vermittlungsstelle SSP1 gesendet und damit zum Verbrauch bei Durchführung einer Telekommunikationsverbindung freigegeben werden. Weiterhin wird durch die erste Abrechnungsnachricht AC1 die erste Vermittlungsstelle SSP1 angeregt, eine später aufzubauende erste Telekommunikationsverbindung V1 zu überwachen und Überwachungsinformationen an den Dienstesteuerungspunkt SCP zu senden.

Dem Dienstesteuerungspunkt SCP ist nun bekannt, dass in Verbindung mit dem ersten Kommunikationsendgerät KEGA auftretende Telekommunikationsgebühren über das vorausbezahlte Guthaben abgerechnet werden sollen. Diese Information wird in Figur 2 symbolisch als Zeichenkette "PPS" (PPS = Prepaid Subscriber) dargestellt. Der Dienstesteuerungspunkt SCP erstellt einen neuen Parameter CgPartysCat (CgPartysCat = CallingPartysCategory). In diesen neuen Parameter wird die Information PPS und eine Kennung SCPx des Dienstesteuerungspunktes SCP (beispielsweise die Adresse SCPx des Dienstesteuerungspunktes SCP, unter der der Dienstesteuerungspunkt von anderen Netzelementen angesprochen werden kann) eingeschrieben. Parameter "CallingPartysCategory" als solche sind aus dem Standard "ETS 300 374-1 (September 1994); Intelligent Network (IN); Intelligent Network Capability Set 1 (CS1); Core Intelligent Network Application Protocol (INAP); Part 1: Protocol specification" des European Telecommunications Standards Institute (ETSI), insb. aus Kap. 9.11 (Connect procedure) bekannt. Die Verwendung eines solchen bereits bekannten und eingeführten Parametertyps für einen neuen Zweck hat den Vorteil, dass die Verwendung von neuen, nicht standardgerechten Parametern vermieden wird.

Daraufhin sendet der Dienstesteuerungspunkt SCP eine erste Verbindungsnachricht CON1 (CON = Continue) an die erste Vermittlungsstelle SSP1. Die erste Verbindungsnachricht CON1 enthält den neu erstellten Parameter CgPartysCat und eine Kennung VMS# des Anrufbeantworters VMS (beispielsweise eine Adresse VMS# des Anrufbeantworters VMS). Daraufhin baut die erste Vermittlungsstelle SSP1 eine erste Telekommunikationsverbindung V1 zwischen dem ersten Kommunikationsendgerät KEGA und dem Anrufbeantworter VMS auf. Dazu wird in bekannter Weise eine Adressierungsnachricht "Initial Address Message" (IAM) von der ersten Vermittlungsstelle SSP1 zu dem Anrufbeantworter VMS gesendet. Diese Nachricht "Initial Address Message" enthält die Kennung VMS# des Anrufbeantworters VMS sowie den Parameter CgPartysCat.

Der Anrufbeantworter VMS sendet als Antwort eine Nachricht "Answer" an die erste Vermittlungsstelle SSP1 zurück. Daraufhin wird die erste Telekommunikationsverbindung V1 zwischen dem ersten Kommunikationsendgerät KEGA und dem Anrufbeantworter VMS aufgebaut. Die erste Telekommunikationsverbindung V1 wird durch die erste Vermittlungsstelle SSP1 überwacht, beispielsweise wird von der ersten Vermittlungsstelle SSP1 die Dauer der ersten Telekommunikationsverbindung V1 registriert (dieser Verfahrensschritt ist optional).

Die Übertragung der Kennung SCPx des Dienstesteuerungspunktes SCP mittels eines ISUP-Parameters (im Ausführungsbeispiel wird der Parameter "Calling Partys Category" verwendet, es können aber auch andere Parameter des ISUP-Kommunikationsprotokolls verwendet werden) ermöglicht vorteilhafterweise eine problemlose Übertragung der Kennung SCPx auch über Grenzen von Telekommunikationsnetzen hinweg. Das erste Kommunikationsendgerät KEGA kann sich also beispielsweise vorteilhafterweise in einem ersten Telekommunikationsnetz (z. B. in einem ersten Mobilfunknetz) befinden, während sich der Anrufbeantworter VMS und das zweite Kommunikationsendgerät KEGB beispielsweise in einem zweiten Telekommunikationsnetz (z. B. einem zweiten Mobilfunknetz) befinden. Das erste und das zweite Telekommunikationsnetz können auch von verschiedenen Netzwerkoperatoren verwaltet werden.

Über die erste Kommunikationsverbindung V1 wird durch das erste Kommunikationsendgerät KEGA eine von dem zweiten Kommunikationsendgerät KEGB stammende, auf dem Anrufbeantworter VMS gespeicherte Nachricht N ausgelesen; die Nachricht N wird abgehört. Nach Auslesen dieser Nachricht N liegt im Ausführungsbeispiel auf Seiten des ersten Kommunikationsendgerätes KEGA der Wunsch vor, direkt mit dem zweiten Kommunikationsendgerät KEGB verbunden zu werden (um beispielsweise direkt auf die ausgelesene Nachricht N zu reagieren). Daher sendet das erste Kommunikationsendgerät KEGA ein Verbindungswunschsignal D in Form eines DTMF-Signals an den Anrufbeantworter VMS. Der Anrufbeantworter VMS reagiert auf das Verbindungswunschsignal D, indem er eine weitere Adressierungsnachricht "Initial Address Message" IAM an die zweite Vermittlungsstelle SSP2 sendet. Diese weitere Nachricht IAM enthält eine Kennung B# des zweiten Kommunikationsendgerätes KEGB (beispielsweise die Telefonnummer B# des zweiten Kommunikationsendgerätes KEGB) und den Parameter CgPartysCat (dieser Parameter enthält unter anderem die Kennung SCPx des Dienstesteuerungspunktes SCP, welcher Dienste für das erste Kommunikationsendgerät KEGA steuert). Die Nachricht IAM wird von dem Anrufbeantworter VMS über eine vorgewählte Datenverbindungsstrecke DS an die zweite Vermittlungsstelle SSP2 übermittelt. Bei der vorgewählten Datenverbindungsstrecke DS handelt es sich um einen Kommunikationskanal, welcher mittels eines Kennzeichens ORIG1 markiert ist (man spricht in diesem Zusammenhang auch von einem mittels des Kennzeichens ORIG1 markierten Trunks).

Von der zweiten Vermittlungsstelle SSP2 wird aufgrund des in der Nachricht IAM enthaltenden Parameters CgPartysCat und aufgrund der Tatsache, dass die Nachricht IAM von dem Anrufbeantworter VMS über die mittels des Kennzeichens ORIG1 gekennzeichnete Datenverbindungsstrecke DS zu der zweiten Vermittlungsstelle SSP2 übermittelt wurde, ein Triggerpunkt ausgelöst. Daraufhin spricht die zweite Vermittlungsstelle SSP2 mittels der in dem Parameter CgPartysCat enthaltenen Kennung SCPx den Dienstesteuerungspunkt SCP an. Dies geschieht, indem eine Nachricht IDP(TDP3) von der zweiten Vermittlungsstelle SSP2 an den Dienstesteuerungspunkt SCP gesendet wird (IDP(TDP3) = Initial Detection Point (Trigger Detection Point 3)). (In einer alternativen Ausführungsform kann die Nachricht IDP(TDP3) schon dann von der zweiten Vermittlungsstelle SSP2 zu dem Dienstesteuerungspunkt SCP übertragen werden, wenn die Nachricht IAM von dem Anrufbeantworter VMS zu der zweiten Vermittlungsstelle SSP2 gesendet worden ist. Auf die Art der für die Datenübertragung genutzten Datenverarbeitungsstrecke kommt es in dieser alternativen Ausführungsform nicht an.)

Mit der Nachricht IDP wird auch die Information übertragen, dass eine zweite Telekommunikationsverbindung V2 zwischen dem Anrufbeantworter VMS und dem zweiten Kommunikationsendgerät KEGB aufgebaut werden soll; ebenfalls übertragen werden Kennzeichen des ersten Kommunikationsendgeräts KEGA und des zweiten Kommunikationsendgeräts KEGB (beispielsweise deren Telefonnummern). Daraufhin wird von dem Dienstesteuerungspunkt SCP ein Dienst gesteuert, der die zweite Telekommunikationsverbindung V2 zwischen dem Anrufbeantworter und dem zweiten Kommunikationsendgerät KEGB betrifft. Im Ausführungsbeispiel umfasst dieser Dienst die Vorbereitung einer Abrechnung von Kommunikationsgebühren für die zweite Telekommunikationsverbindung.

Daraufhin überprüft (optionaler Schritt) der Dienstesteuerungspunkt SCP erneut, ob für den Teilnehmer mit dem ersten Kommunikationsendgerät KEGA ein ausreichend großes vorausbezahltes Guthaben zur Abrechnung von Telekommunikationsverbindungen vorhanden ist. Bei Vorliegen eines solchen Guthabens sendet der Dienstesteuerungspunkt SCP eine zweite Abrechnungsnachricht AC2 an die zweite Vermittlungsstelle SSP2. Durch die zweite Abrechnungsnachricht AC2 wird die zweite Vermittlungsstelle SSP2 angeregt, die später aufzubauende zweite Kommunikationsverbindung V2 zu überwachen und Überwachungsinformationen an den Dienstesteuerungspunkt SCP zu senden. Weiterhin sendet der Dienstesteuerungspunkt SCP eine zweite Verbindungsnachricht CON2 an die zweite Vermittlungsstelle SSP2. Diese zweite Verbindungsnachricht CON2 enthält die Kennung B# des zweiten Kommunikationsendgeräts KEGB sowie einen von dem Dienstesteuerungspunkt SCP neu erstellten Parameter CgPartysCat. Mit diesem neu erstellten Parameter CgPartysCat wird jetzt nicht mehr die Information PPS und die Kennung SCPx übertragen; vielmehr weist der Parameter CgPartysCat jetzt den Wert "Ordinary Subscriber" (= gewöhnlicher Teilnehmer) auf. Dies ist der Wert, der üblicherweise für Telekommunikationsteilnehmer in diesem Parameter eingetragen ist.

Nach Erhalt der zweiten Verbindungsnachricht CON2 baut die zweite Vermittlungsstelle SSP2 die zweite Telekommunikationsverbindung V2 zwischen dem Anrufbeantworter VMS und dem zweiten Kommunikationsendgerät KEGB auf. Dies geschieht in bekannter Weise dadurch, dass die zweite Vermittlungsstelle SSP2 eine Nachricht "Initial Address Message" (IAM) an das zweite Kommunikationsendgerät KEGB sendet und das zweite Kommunikationsendgerät KEGB mit der Nachricht "Answer" antwortet.

Über die zweite Telekommunikationsverbindung V2 werden nun beispielsweise Sprachdaten oder andere Daten zwischen dem ersten Kommunikationsendgerät KEGA und dem zweiten Kommunikationsendgerät KEGB übertragen; das erste Kommunikationsendgerät KEGA wird also über die erste Telekommunikationsverbindung V1 und die zweite Telekommunikationsverbindung V2 mit dem zweiten Kommunikationsendgerät KEGB verbunden. Die erste Vermittlungsstelle SSP1 überwacht (optionaler Verfahrensschritt) dabei die erste Telekommunikationsverbindung V1 und stellt fortlaufend fest, um welche aufgrund der ersten Telekommunikationsverbindung V1 auftretende Gebührenbeträge das voraus bezahlte Guthaben zu vermindern ist. Die zweite Vermittlungsstelle SSP2 überwacht fortlaufend die zweite Telekommunikationsverbindung V2 und stellt ebenfalls fortlaufend fest, um welche aufgrund des Bestehens der Telekommunikationsverbindung V2 auftretende Gebührenbeträge das voraus bezahlte Guthaben zu vermindern ist.

Schließlich wird im Ausführungsbeispiel die zwischen den Kommunikationsendgeräten KEGA und KEGB bestehende Verbindung dadurch beendet bzw. getrennt, dass auf Seiten des Kommunikationsendgerätes KEGB "aufgelegt wird". Daraufhin sendet das zweite Kommunikationsendgerät KEGB eine Nachricht "Release" an die zweite Vermittlungsstelle SSP2. Die zweite Vermittlungsstelle SSP2 beendet daraufhin die zweite Telekommunikationsverbindung V2; die zweite Vermittlungsstelle SSP2 beendet auch die Überwachung dieser zweiten Telekommunikationsverbindung V2. Daraufhin sendet die zweite Vermittlungsstelle SSP2 mit einer zweiten Überwachungsnachricht ACR2 (ACR2 = Apply Charging Report) Überwachungsinformationen (z. B. in Form des aufgetretenen Gebührenbetrags) an den Dienstesteuerungspunkt SCP. Daraufhin rechnet der Dienstesteuerungspunkt SCP die Gebühren für die zweite Telekommunikationsverbindung V2 ab, indem er den voraus bezahlten Guthabenbetrag um den verbrauchten Gebührenbetrag vermindert. Damit ist die Abrechnung der für die zweite Telekommunikationsverbindung V2 angefallenen Gebührenbeträge abgeschlossen. Von der zweiten Vermittlungsstelle SSP2 wird die Nachricht "Release" an den Anrufbeantworter VMS weitergeleitet.

Da die erste Telekommunikationsverbindung V1 weiter besteht, können von dem ersten Kommunikationsendgerät KEGA weitere auf dem Anrufbeantworter VMS gespeicherte Nachrichten ausgelesen bzw. abgehört werden. Dabei wiederholen sich die vorstehend beschriebenen Verfahrensschritte, wobei anstelle des bisher beschriebenen Kommunikationsendgerätes KEGB selbstverständlich andere Kommunikationsendgeräte beteiligt sein können. Das erste Kommunikationsendgerät KEGA kann also mit weiteren, in der Figur 2 nicht dargestellten Kommunikationsendgeräten KEGC, KEGD usw. verbunden werden, sofern diese weiteren Kommunikationsendgeräte eine Nachricht auf dem Anrufbeantworter VMS gespeichert hatten.

Schließlich wird von Seiten des ersten Kommunikationsendgerätes KEGA die erste Telekommunikationsverbindung V1 beendet, in dem auf Seiten des ersten Kommunikationsendgerätes KEGA "aufgelegt wird". Die erste Vermittlungsstelle SSP1 beendet die Überwachung dieser ersten Telekommunikationsverbindung V1 und sendet mit einer ersten Überwachungsnachricht ACR1 Überwachungsinformationen (z. B. in Form des aufsummierten Gebührenbetrags) an den Dienstesteuerungspunkt SCP zurück (dieser Schritt ist optional). Daraufhin rechnet der Dienstesteuerungspunkt SCP auch die im Zusammenhang mit der ersten Telekommunikationsverbindung V1 aufgetretenen Telekommunikationsgebühren ab, in dem er den voraus bezahlten Guthabenbetrag um den verbrauchten Betrag vermindert (optionaler Schritt). Schließlich sendet der Dienstesteuerungspunkt SCP eine Nachricht "ReleaseCall" an die erste Vermittlungsstelle SSP1. Damit wird die erste Telekommunikationsverbindung V1 abgebaut und das Verfahren beendet.

Bei dem beschriebenen Verfahren ist besonders vorteilhaft, dass von dem einen Dienstesteuerungspunkt SCP sowohl der Aufbau der ersten Telekommunikationsverbindung V1 und der zweiten Telekommunikationsverbindung V2 als auch ein Abrechnen der Kommunikationsgebühren für die erste Telekommunikationsverbindung V1 und für die zweite Telekommunikationsverbindung V2 gesteuert werden können. Dabei ist es sogar möglich, dass sich die erste Vermittlungsstelle SSP1 und die zweite Vermittlungsstelle SSP2 in unterschiedlichen Telekommunikationsnetzen befinden. Vorteilhafterweise wird nämlich eine Kennung SCPx des Dienstesteuerungspunktes SCP, welcher Dienste für das erste Kommunikationsendgerät KEGA steuert, an die zweite Vermittlungsstelle SSP2 übermittelt. Diese Übermittlung erfolgt vorteilhafterweise z.B. mittels eines an sich bekannten Parameters einer nach dem ISUP-Kommunikationsprotokoll aufgebauten Nachricht. Aufgrund der Steuerung und der Abrechnung der Telekommunikationsverbindungen durch nur einen einzigen Dienstesteuerungspunkt SCP ist auch ein einziges voraus bezahltes Guthaben zur Abrechnung mehrerer Telekommunikationsverbindungen ausreichend. Damit lässt sich das erfindungsgemäße Verfahren vorteilhafterweise auch im Zusammenhang mit einem im Heimat-Telekommunikationsnetz des Kommunikationsendgeräts KEGA angeordneten "Prepaid-Abrechnungssystem" verwenden.

## Patentansprüche

1. Verfahren zum Aufbauen von Telekommunikationsverbindungen unter Nutzung einer auf einem Anrufbeantworter (VMS) gespeicherten Nachricht, wobei bei dem Verfahren
- eine erste Telekommunikationsverbindung (V1) zwischen einem ersten Kommunikationsendgerät (KEGA) und dem Anrufbeantworter (VMS) aufgebaut wird,
- über die erste Telekommunikationsverbindung (V1) von dem ersten Kommunikationsendgerät (KEGA) eine von einem zweiten Kommunikationsendgerät (KEGB) stammende, auf dem Anrufbeantworter (VMS) gespeicherte Nachricht (N) ausgelesen wird,
- auf ein Verbindungswunschsignal (D) des ersten Kommunikationsendgeräts (KEGA) hin eine Kennung (SCPx) eines Dienstesteuerungspunktes (SCP), welcher Dienste für das erste Kommunikationsendgerät (KEGA) steuert, an eine zweite Vermittlungsstelle (SSP2) übermittelt wird,
- von der zweiten Vermittlungsstelle (SSP2) mittels der Kennung (SCPx) der Dienstesteuerungspunkt (SCP) angesprochen wird,
- daraufhin von dem Dienstesteuerungspunkt ein Dienst gesteuert wird, der eine zweite Telekommunikationsverbindung (V2) zwischen dem Anrufbeantworter und dem zweiten Kommunikationsendgerät (KEGB) betrifft, und
- bei Erhalt einer von dem Dienstesteuerungspunkt stammenden Verbindungsnachricht (CON2) von der zweiten Vermittlungsstelle (SSP2) die zweite Telekommunikationsverbindung (V2) aufgebaut wird.

2. Verfahren nach Anspruch 1,
**dadurch gekennzeichnet , dass**
- als Dienst, der die zweite Telekommunikationsverbindung (V2) betrifft, eine Abrechnung von Kommunikationsgebühren für die zweite Telekommunikationsverbindung vorbereitet wird.

3. Verfahren nach Anspruch 2,
**dadurch gekennzeichnet , dass**
- bei der Vorbereitung der Abrechnung von dem Dienstesteuerungspunkt überprüft wird, ob für das erste Kommunikationsendgerät (KEGA) ein vorausbezahltes Guthaben zur Abrechnung von Telekommunikationsverbindungen vorhanden ist, und
- bei Vorliegen eines solchen Guthabens eine Abrechnungsnachricht (AC2) an die zweite Vermittlungsstelle (SSP2) gesendet wird.

4. Verfahren nach Anspruch 3,
**dadurch gekennzeichnet , dass**
- durch die Abrechnungsnachricht (AC2) die zweite Vermittlungsstelle (SSP2) angeregt wird, die zweite Telekommunikationsverbindung (V2) zu überwachen und Überwachungsinformationen an den Dienstesteuerungspunkt(SCP) zu senden (ACR2).

5. Verfahren nach einem der vorhergehenden Ansprüche,
**dadurch gekennzeichnet , dass**
- das erste Kommunikationsendgerät (KEGA) über die erste Telekommunikationsverbindung (V1) und die zweite Telekommunikationsverbindung (V2) mit dem zweiten Kommunikationsendgerät (KEGB) verbunden wird.

6. Verfahren nach einem der vorhergehenden Ansprüche,
**dadurch gekennzeichnet , dass**
- als Verbindungswunschsignal ein DTMF-Signal (D) verwendet wird.

7. Verfahren nach einem der vorhergehenden Ansprüche,
**dadurch gekennzeichnet , dass**
- nach Beendigung der zweiten Telekommunikationsverbindung (V2) die erste Telekommunikationsverbindung (V1) aufrechterhalten wird, um eine weitere auf dem Anrufbeantworter (VMS) gespeicherte Nachricht auszulesen.

8. Verfahren nach einem der vorhergehenden Ansprüche,
**dadurch gekennzeichnet , dass**
- gemeinsam mit der Kennung (SCPx) des Dienstesteuerungspunktes (SCP) die Information übertragen wird, dass Kommunikationsgebühren für das erste Kommunikationsendgerät (KEGA) unter Nutzung eines vorausbezahlten Guthabens abgerechnet werden, und
- aufgrund der Kennung und der Information von der zweiten Vermittlungsstelle (SSP2) der Dienstesteuerungspunkt (SCP) angesprochen wird.

9. Verfahren nach einem der vorhergehenden Ansprüche,
**dadurch gekennzeichnet , dass**
- von der zweiten Vermittlungsstelle (SSP2) der Dienstesteuerungspunkt nur dann angesprochen wird, wenn die Kennung (SCPx) des Dienstesteuerungspunktes (SCP) von dem Anrufbeantworter (VMS) zu der zweiten Vermittlungsstelle (SSP2) übermittelt wird.

10. Verfahren nach einem der vorhergehenden Ansprüche,
**dadurch gekennzeichnet , dass**
- von der zweiten Vermittlungsstelle (SSP2) der Dienstesteuerungspunkt nur dann angesprochen wird, wenn die Kennung (SCPx) des Dienstesteuerungspunktes (SCP) von dem Anrufbeantworter (VMS) über eine vorgewählte Datenverbindungsstrecke (DS) zu der zweiten Vermittlungsstelle (SSP2) übermittelt wird.
